Europäisches Patentamt

European Patent Office

Office européen des brevets

(11) Veröffentlichungsnummer: **0 180 860**
**A2**

(12) **EUROPÄISCHE PATENTANMELDUNG**

(21) Anmeldenummer: **85113503.8**

(22) Anmeldetag: **24.10.85**

(51) Int. Cl.⁴: **H 02 P 5/418**

(30) Priorität: **09.11.84 DE 3440920**

(43) Veröffentlichungstag der Anmeldung:
**14.05.86 Patentblatt 86/20**

(84) Benannte Vertragsstaaten:
**FR GB IT NL SE**

(71) Anmelder: **C. & E. FEIN GmbH & Co.**
**Leuschnerstrasse 41-47**
**D-7000 Stuttgart 1(DE)**

(72) Erfinder:
**Die Erfinder haben auf ihre Nennung verzichtet**

(54) **Einrichtung zur Drehzahlregelung.**

(57) Die Einrichtung zur Drehzahlregelung für Universalmotoren in Elektrowerkzeugen weist Vorrichtungen auf, mit denen der tatsächliche Motorstrom und die tatsächliche Drehzahl des Motors (3) erfaßt werden können. Mit Stellgliedern für Motorspannung, Motorstrom, Drehzahlcharakteristik und Drehzahl kann über eine Regelschaltung (7) und über einen Triac (6) auf das Laufverhalten des Motors (3) eingewirkt werden. Die mit dem Regelkreis (7) zu erzielenden Drehzahlcharakteristiken erlauben es, den Regelkreis (7) für verschiedene Werkzeuge zu verwenden oder in einem Universalwerkzeug einzusetzen.

Fig.1

C. & E.  FEIN  GmbH & Co.
Stuttgart
TXPU 235

## Einrichtung zur Drehzahlregelung

Die Erfindung betrifft eine Einrichtung zur Drehzahlregelung für Universalmotoren, die in Elektrowerkzeugen angeordnet sind, nach dem Oberbegriff des Hauptanspruchs.

Derartige Regeleinrichtungen sind bekannt. Zum Beispiel in der DE-OS 19 48 828 wird eine Regeleinrichtung beschrieben, bei der ein Istwertgeber für die Drehzahl auf ein Schaltelement einwirkt, das bei Erreichen eines einstellbaren Drehzahl-Sollwertes die Stromzufuhr zum Motor abschaltet und bei Unterschreiten des Sollwertes die Stromzufuhr zum Motor freigibt. Damit kann die Drehzahl des Motors konstant gehalten werden.

Heutzutage wird das Elektrowerkzeug als universell einsetzbares Werkzeug verwendet, z. B. als Bohrmaschine, Schlagbohrmaschine, Schrauber und Schlagschrauber. Aus diesem Grund ist eine Regeleinrichtung, die nur die Drehzahl konstant halten kann, für ein universell einsetzbares Elektrowerkzeug nicht ausreichend. Deshalb wurde nach einer Schaltung gesucht, mit der man einen möglichst breiten Anwendungsbereich abdecken kann.

Es ist Aufgabe der vorliegenden Erfindung, eine Regeleinrichtung zu schaffen, die nicht nur die Drehzahl des Motors konstant hält, sondern auch zuläßt, daß bei verschiedenen Anwendungsfällen unterschiedliche Drehzahlcharakteristiken erzielt werden können. So z. B. soll, bei Betreiben des Elektrowerkzeugs als Bohrmaschine, die Kennlinie der Drehzahl eine steife Charakteristik aufweisen. Es ist wünschenswert, wenn das Elektrowerkzeug als Schrauber benützt wird, daß die Drehzahlkennlinie, in Abhängigkeit vom Drehmoment, nachgiebig ist. Bei Linkslauf soll das Elektrowerkzeug generell nur mit halber Drehzahl betrieben werden, jedoch mit vollem Drehmoment. Damit wird erreicht, daß die Schrauben mit maximalem Drehmoment herausgedreht werden können.

Gelöst wird die Aufgabe durch die im kennzeichnenden Teil des Hauptanspruchs aufgeführten Merkmale.

Eine weitere vorteilhafte Ausführung wird dadurch erzielt, daß nach Anspruch 2 außerhalb der Regelschaltung eine ein-

...

stellbare Einrichtung zur Begrenzung des Motorstroms vorgesehen ist. Über ein Anzeigeelement erfolgt eine frühzeitige Vorwarnung für das Abschalten, so daß der Bedienende rechtzeitig Maßnahmen zur Reduzierung des Motorstroms treffen kann.

Durch die nach Anspruch 4 dargestellte Schalteinrichtung wird der Benützer des Elektrowerkzeugs gezwungen, beim Umschalten von Rechts- auf Linkslauf und umgekehrt, den Motor erneut einzuschalten. Das erhöht die Betriebssicherheit der Maschine.

Eine weitere vorteilhafte Ausgestaltung der Regeleinrichtung ist darin zu sehen, daß wenn der Istwertgeber für die Drehzahl kein Signal mehr liefert, der Motor über eine Phasenwinkeleinstellung auf einem bestimmten Drehzahlniveau gehalten wird. So kann man z.B. mit der Maschine die begonnene Arbeit beenden, ohne daß sie durch Reparaturarbeiten am Elektrowerkzeug unterbrochen wird.

Anhand eines Ausführungsbeispiels ist die Regeleinrichtung in Zeichnungen näher beschrieben.

Es zeigen:

Fig. 1    ein Schaltschema der Regeleinrichtung mit Universalmotor;

Fig. 2    die schematisch dargestellte Regeleinrichtung;

...

Fig. 3  Kennlinie der Drehzahl bei steifer Charakteristik;

Fig. 4  Kennlinie der Drehzahl bei weicher Charakteristik mit konstantem Abfall;

Fig. 5  Kennlinie der Drehzahl bei weicher Charakteristik mit einstellbarem Abfall.

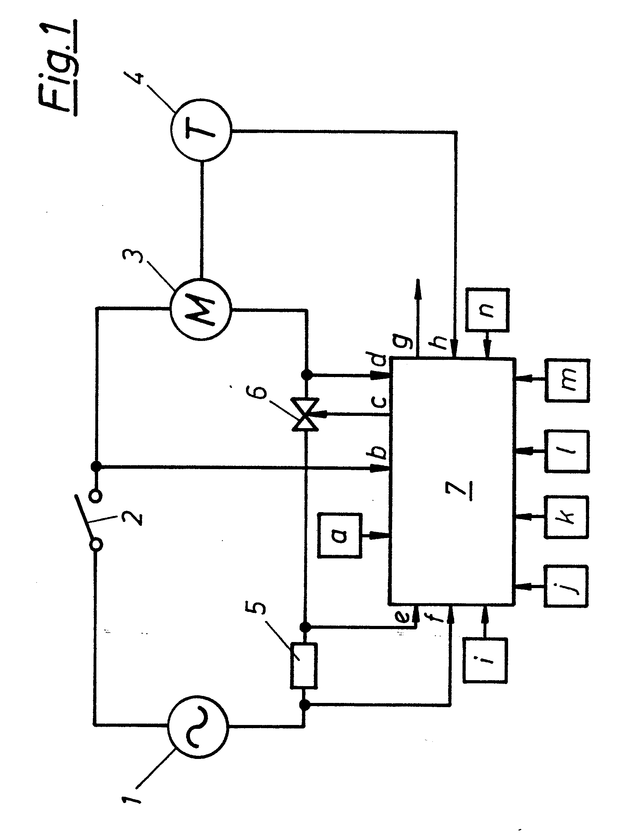

Das Ausführungsbeispiel nach Fig. 1 zeigt einen Elektromotor 3, der durch eine Stromquelle 1 gespeist wird. Die Stromversorgung kann über einen Schalter 2 eingeschaltet oder unterbrochen werden. Das gleiche kann durch einen ebenfalls in Reihe geschalteten Triac 6 erreicht werden.

Weiter ist ein Widerstand 5 in Reihe geschaltet, über den der Istwert für den im Versorgungskreis herrschenden Strom abgegriffen werden kann. Ein Tachogenerator 4 erzeugt ein Signal für die am Motor 3 tatsächlich auftretende Drehzahl des Motors 3. Dieses Signal wird zur Verarbeitung an den Regelkreis 7 durch den Eingang h eingegeben. Durch die Eingänge e und f erhält der Regelkreis 7 ein Signal für den am Motor 3 angelegten Strom, durch die Eingänge b und d ein Signal für die am Motor 3 anliegende Spannung. Durch den Eingang b erhält der Regelkreis 7 die Information, ob der Schalter 2 offen oder geschlossen ist. Die Eingänge a und i bis l liefern die festen oder veränderbaren Sollwerte für

...

- 6 -

Drehzahl, Phasenwinkel, Strom, Spannung und die Regelcharakteristik. Über den Ausgang c sperrt und öffnet der
Regelkreis 7 den Triac 6 und steuert damit den Motor 3.

Der Ausgang g liefert ein frühzeitiges Signal dafür,
daß der eingestellte Grenzwert für den Motorstrom
erreicht wird.

Durch die Eingänge m und n erhält der Regelkreis 7 die
Information, ob der Motor 3 auf Rechts- oder Linkslauf
geschaltet ist.

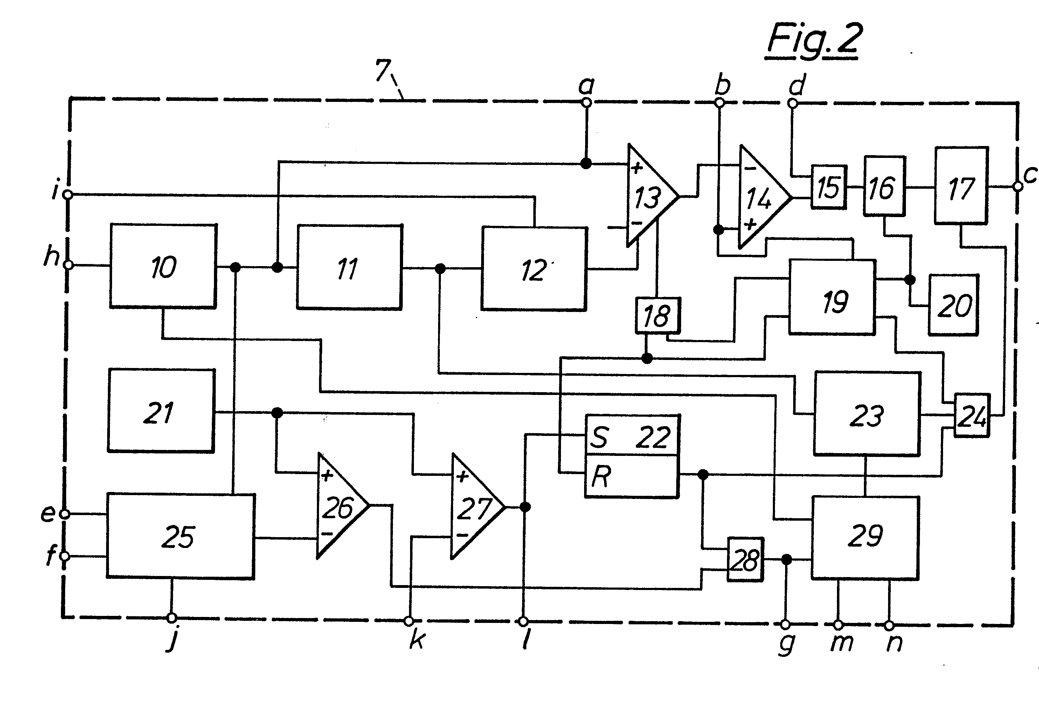

Fig. 2 zeigt das Blockschaltbild des Regelkreises 7.
Über die Eingänge e und f wird der am Widerstand 5
abgegriffene tatsächliche Strom auf eine Strommeßschaltung 25 gegeben. Der manuell einzustellende Wert
für die Steilheit der Regelcharakteristik gelangt
über den Eingang j auf die Strommeßschaltung 25.
Gemeinsam mit den Informationen vom Tachogenerator 4,
die über den Eingang h in den Regelkreis 7 gelangen
und in einen Frequenz-Spannungswandler 10 angepaßt

...

- 6 -

werden, erzeugen die Informationen aus der Strommeßschaltung 25, wenn sie die Nulldurchgangsüberwachung 11,
die Zündwinkelbegrenzung 12, die Operationsverstärker
13 und 14, das NOR-Glied 15, den Schmitt-Trigger 16
und den Zündverstärker 17 passiert haben, am Ausgang c
ein Signal, das den Triac 6 zündet. Das über die Eingänge m und n ankommende und in einer Richtungserkennung 29 verarbeitete Signal wird mit dem durch
den Eingang h kommende Signal im Frequenz-Spannungswandler 10 zu einer Information verknpüft, die bewirkt,
daß bei Nulldurchgang in der Nulldurchgangsüberwachung
11 der Nulldurchgang erkannt wird und der Signalfluß
über eine Rückwärtsverriegelung 23 und einem NOR-Glied
24 den Zündverstärker 17 sperrt. Erst nach erneutem
Drücken des Schalters 2 wird über das Rücksetzelement
20 einer Verriegelung 19 und einem NOR-Glied 18 auf
den Operationsverstärker 13 so eingewirkt, daß der
Regelkreis 7 arbeiten kann.

...

- 6 -

Zur Begrenzung des Motorstromes wird das in der Strommeßschaltung 25 entstehende Signal mit einem festen Signal aus einer Abschaltreferenz 21 über einen Operationsverstärker 26 verstärkt. Die Abschaltreferenz 21 ist weiter mit dem Sollwert für die Abschaltbegrenzung, der durch den Eingang k in den Regelkreis gelangt, über den Operationsverstärker 27 verknüpft. Der Ausgang des Operationsverstärkers 27 setzt einen Speicher 22, dessen Ausgang über das NOR-Glied 24 den Zündverstärker 17 sperren und über ein NOR-Glied 28 und den Ausgang g auf ein nicht dargestelltes Anzeigeelement einwirken kann.

Der Eingang d gibt ebenso wie der Ausgang des Operationsverstärkers 14 ein Signal auf das NOR-Glied 15. Dieses Signal dient zur Stromflußüberwachung.

Der Drehzahl-Sollwert, der den Eingang a am Regelkreis 7 belegt, ist im Operationsverstärker 13 mit dem vom Frequenz-Spannungswandler 10 kommenden Signal verknüpft und steuert über den Operationsverstärker 14, dem NOR-Glied 15 und den Schmitt-Trigger 16 den Zündverstärker 17.

...

Für den Fall, daß der Tachogenerator 4 ausfallen sollte und über den Eingang h kein Signal anliegt, ist die Zündwinkelbegrenzung 12 vorgesehen. Über den Eingang i wird ein von außen einstellbarer Wert für den Phasenwinkel vorgegeben, der im Fall des Ausbleibens des Signals am Eingang h dafür sorgt, daß der Motor auf einem bestimmten Drehzahlniveau weiterlaufen kann.

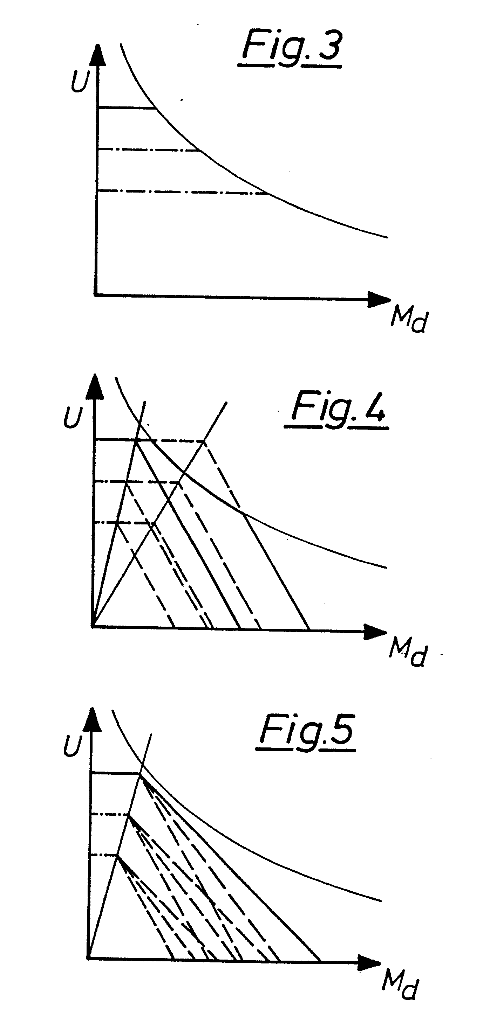

Die in der Fig. 3 dargestellte Kennlinie zeigt eine sog. harte Charakteristik, wie sie z. B. bei einer Bohrmaschine erwünscht ist. Die Drehzahl bleibt auch bei steigendem Drehmoment konstant und sinkt erst bei dem motorspezifischen Maximalwert ab.

In Fig. 4 ist eine Kennlinie mit weicher Charakteristik dargestellt, wie sie z. B. beim Schrauben erforderlich ist. Über den Eingang m in der Regelschaltung 7 kann der Wert für das Drehmoment eingegaben werden, bei dessen Erreichen die Drehzahl abgesenkt werden soll. Auch hier ist der Maximalwert für die Drehzahl durch den Motortyp vorgegeben.

Eine Variante nach Fig. 4 ist in Fig. 5 gezeigt. Hier ist der Abschaltpunkt in Abhängigkeit vom Drehzahlniveau konstant, aber das maximal zu erzielende Moment ist einstellbar. Mit der dargestellten Regelschaltung läßt sich jede der in Fig. 3 bis 5 gezeigten Regelcharakteristiken realisieren, einzeln oder als Kombination.

-1-

C. & E. FEIN GmbH & Co.
Stuttgart
TXPU 235


P a t e n t a n s p r ü c h e
_____


1. Einrichtung zur Drehzahlregelung für Universalmotoren
in Elektrowerkzeugen mit einer Vorrichtung zur Erfassung der tatsächlichen Drehzahl und des tatsächlichen
Motorstroms, d a d u r c h  g e k e n n -
z e i c h n e t , daß Stellglieder vorgesehen sind, mit
denen die Sollwerte für Motorspannung, Motorstrom,
Regelcharakteristik und Drehzahl vorgegeben sind und
die Sollwerte in einem Regelkreis (7) mit den Istwerten über eine Rechts - Linkslauferkennung (29),
einen Frequenz-Spannungswandler (10) und über eine
Strommeßschaltung (25) verknüpft sind und ein Signal
an ein Regelelement (6) abgegeben wird.


• • •

2. Regeleinrichtung nach Anspruch 1, d a d u r c h g e k e n n z e i c h n e t , daß außerhalb des Regelkreises (7) eine einstellbare Einrichtung zur Begrenzung des Motorstroms vorgesehen ist.

3. Regeleinrichtung nach Anspruch 2, d a d u r c h g e k e n n z e i c h n e t , daß der Strom-Istwert und eine Abschaltbegrenzung (21) über je einen Operationsverstärker (26 und 27) und ein Speicherglied (22) so zusammengeschaltet sind, daß eine Anzeige noch vor dem Abschalten erfolgt.

4. Regeleinrichtung nach Anspruch 1, d a d u r c h g e k e n n z e i c h n e t , daß eine Richtungserkennung (29) vorgesehen ist, die über den Frequenz-Spannungswandler (10) und eine Nulldurchgangsüberwachung (11) die Versorgung des Motors (3) bei Null-Durchgang sperrt.

5. Regeleinrichtung nach Anspruch 1, d a d u r c h g e k e n n z e i c h n e t , daß bei Ausfall des Drehzahl-Istwertes der Motor (3) über eine Zündwinkelbegrenzung (12) auf einem bestimmten Drehzahlniveau gehalten wird.

...

*Fig.1*

Fig.2

7

a    b    d

i

h

10    11    12

13    14    15    16    17    c

18    19    20

21    23    24

S  22
R

e
25    26    27    29

f    28

j    k    l    g  m  n

2/3

0180860

0180860

_Fig.3_

_Fig.4_

_Fig.5_